(19) Europäisches Patentamt
European Patent Office
Office européen des brevets

(11) **EP 1 164 276 B1**

(12) **EUROPEAN PATENT SPECIFICATION**

(45) Date of publication and mention
of the grant of the patent:
**05.03.2008 Bulletin 2008/10**

(51) Int Cl.:
*F02D 41/38* (2006.01)   *F02D 41/40* (2006.01)
*F02D 37/02* (2006.01)   *F02P 5/153* (2006.01)

(21) Application number: **01114226.2**

(22) Date of filing: **12.06.2001**

(54) **Internal combustion engine with external assist for stable auto-ignition**

Brennkraftmaschine mit externer Unterstützung für stabile Selbstzündung

Moteur à combustion interne avec support externe pour auto-allumage stable

(84) Designated Contracting States:
**DE FR GB**

(30) Priority: **13.06.2000 JP 2000176297**

(43) Date of publication of application:
**19.12.2001 Bulletin 2001/51**

(73) Proprietor: **NISSAN MOTOR COMPANY LIMITED**
**Yokohama-shi Kanagawa 221-0023 (JP)**

(72) Inventors:
• **Hiraya, Koji**
**Yokohama-shi,**
**Kanagawa 236-0021 (JP)**
• **Miyakubo, Hiroshi**
**Yokosuka-shi,**
**Kanagawa 237-0066 (JP)**
• **Yoshizawa, Koudai**
**Yokosuka-shi,**
**Kanagawa 237-0062 (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**WO-A-99/06683**     **WO-A-99/42718**

**Description**

The present invention relates to an internal combustion engine operated on auto-ignition combustion.

JP-A 10-196424 discloses an auto-ignition internal combustion engine. According to this known engine, each cylinder has a control piston in addition to a reciprocating piston. Time of auto-ignition of air/fuel mixture is governed by the control piston, which provides additional compression around top dead center of reciprocating piston. With this additional compression, the air/fuel mixture can be elevated in temperature high enough for auto-ignition.

JP-A 11-210539 discloses a spark assist type auto-ignition internal combustion engine. According to this known engine, an open time of intake valve is adjusted to vary amount of burnt gas to be drawn during induction stroke of piston, thereby to vary temperature of gas within a combustion chamber. A temperature sensor is provided to detect the temperature of gas. If it is determined that the temperature of gas within the combustion chamber fail to match a target temperature level, the open time of the intake valve is adjusted to maintain the gas temperature as high as the target temperature level. At the target temperature level, the air/fuel mixture starts auto-ignition if spark is produced by a spark plug.

Auto-ignition can occur when certain conditions are met within a charge of air/fuel mixture. With auto-ignition, bulk combustion takes place initiated simultaneously from many ignition sites within the charge, resulting in combustion with low local burning temperature. As different from spark-ignition combustion based on propagating flame front, in auto-ignition combustion where the combustion is uniformly distributed throughout the charge from many ignition sites, the burnt gas temperature is substantially homogeneous with much lower local temperature values, resulting in very low NOx emission. This type of combustion is disadvantageous if relatively rich air/fuel mixture is used against increased load request. If a charge of rich air/fuel mixture is combusted from many ignition sites, cylinder pressure rises too rapidly, resulting in production of noticeable vibration and noise.

One proposal to avoid such rapid increase in cylinder pressure is to set ignition time at around or after top dead center of compression stroke. This causes combustion of most of fuel within the charge to take place after top dead center of compression stroke. With delayed ignition, initial stage combustion progresses as a piston descends, resulting in increased tendency to provide unstable combustion. Thus, there is a limit to retarding the ignition time.

Accordingly, for extending range of auto-ignition combustion toward increased load, there remains a need for technique to ensure stable ignition of charge even with delayed time of ignition.

If the known technique of JP-A 10-196424 is employed for carrying out auto-ignition during operation with high load, time of ignition may be adjusted to a desired relatively delayed crank position. This technique is satisfactory in adjusting ignition time, but needs additional power to activate the control piston, deteriorating fuel economy. Particularly, the degree of deterioration in fuel economy becomes great during light load operation where influence of cooling loss upon fuel economy is great.

If the known technique ofJP-A 11-210539 is employed for carrying out stable ignition of homogenous charge, time of ignition can be held invariable due to assist by spark from a spark plug. The use of spark has proven to be effective under conditions where auto-ignition before top dead center of compression stroke is required. However, experiments conducted by the inventors of this application have revealed that it is impossible to retard ignition time enough to cause auto-ignition combustion to take place around or after the top dead center. Therefore, it is confirmed that this known technique is not effective in carrying out stable auto-ignition combustion during operation with high load.

A stratified charge between local relatively rich air/fuel mixture and the surrounding relatively lean air/fuel mixture may accomplish stable ignition in auto-ignition combustion. In the stratified charge, burning due to auto-ignition is initiated from the local rich air/fuel mixture, and the temperature and pressure due to this burning causes auto-ignition combustion within the surrounding lean air/fuel mixture. Time of fuel injection can determine time of ignition. If, however, fuel with low cetane number such as gasoline, is used, it is difficult to hold time of ignition invariable if time of fuel injection is fixed. Retarding time of ignition to a crank position around or after top dead center of compression stroke is too difficult to accomplish. Therefore, this known technique is not effective in carrying out stable auto-ignition combustion during operation with high load.

Use of ignitable fuel is proposed to hold time of ignition invariable. This proposal makes it possible to retard combustion event to a crank position after top dead center of compression stroke, thus allowing auto-ignition combustion during operation with high load. If this technique is applied to a gasoline internal combustion engine, a tank for ignitable fuel requires additional space. To minimize the additional space, volume of a tank should be reduced by carrying out injection of ignitable fuel only when required to suppress consumption of ignitable fuel.

A so-called spark assist type stratified charge auto-ignition combustion is known. According to this combustion process, local air/fuel mixture around a spark plug is made rich enough to be ignitable by a spark. Burning of the local air/fuel mixture causes auto-ignition of the surrounding relatively lean air/fuel mixture. This combustion process is considered to be effective during operation with high load because time of ignition may be retarded to a crank position around or after top dead center of compression stroke. The air/fuel mixture around the spark plug should be set around the stoichiometry for stable flame propagation. If it is lean, it becomes difficult to ignite by spark. If it is too rich, it turns into soot and hydrocarbon (HC) after burning initiated by spark. This spark assist type combustion process cannot provide stable combustion throughout the charge within cylinder during operation with light load. Fuel quantity for injection decreases during operation with light load. If the local air/fuel mixture around spark plug is set around the stoichiometry, the air/fuel mixture occupying the remaining portion of cylinder inevitably becomes extremely lean, resulting in unstable auto-ignition throughout the cylinder charge although stable flame propagation throughout the local air/fuel mixture is provided. As a result, stable combustion is not expected during operation with light load. Flame propagation produces NOx, and unstable combustion produces hydrocarbon (HC), resulting in increased emission of NOx and HC.

Prior art document WO 99/42718 teaches an internal combustion engine having at least one cylinder and a reciprocating piston within said cylinder to define a combustion chamber. Said internal combustion engine can carry out a premixed charged compression ignition with optimal combustion control. Said internal combustion engine can be operated in an auto-ignition mode, wherein a compression ignition is used in order to trigger said auto-ignition. Furthermore, said engine of prior art document WO 99/42718 can be operated within a spark-ignition mode, wherein the air/fuel mixture is ignited by a spark plug. In particular, the air/fuel mixture is ignited and the air/fuel mixture charge is burned by flame propagation through the combustion chamber.

It is an objective of the present invention to provide an internal combustion engine having high combustion performance.

According to the present invention, said objective is solved by an internal combustion engine having the features of independent claim 1.

Preferred embodiments are laid down in the dependent claims.

The present invention will be more fully appreciated as the same becomes better understood from the following detailed description when considered in connection with the accompanying drawings, in which like reference numerals and characters designate like or corresponding parts through the several views.

Figure 1 is a block diagram illustrating a first embodiment of an internal combustion engine according to the present **teaching.**

Figure 2 is a flow chart implementing the present **teaching.**

Figure 3 is an overall A/F map showing variation characteristic of overall air/fuel ratio (AFall) within cylinder against varying operating conditions as represented by engine speed (Ne) and load request (Te).

Figure 4 is a local A/F map showing variation characteristic of local air/fuel ratio (AF2) against varying operating conditions as represented by engine speed (Ne) and load request (Te).

Figure 5 is an injection map showing variation characteristic of injection time of fuel for ignition (IT2) against varying operating conditions as represented by engine speed (Ne) and load request (Te).

Figure 6 is a block diagram illustrating a second embodiment of an internal combustion engine according to the present **teaching.**

Figure 7 is a block diagram illustrating a third embodiment of an internal combustion engine according to the present **teaching.**

Figure 8 is a block diagram illustrating a fourth embodiment of an internal combustion engine according to the present **teaching and the combination of the features of independent claim 1.**

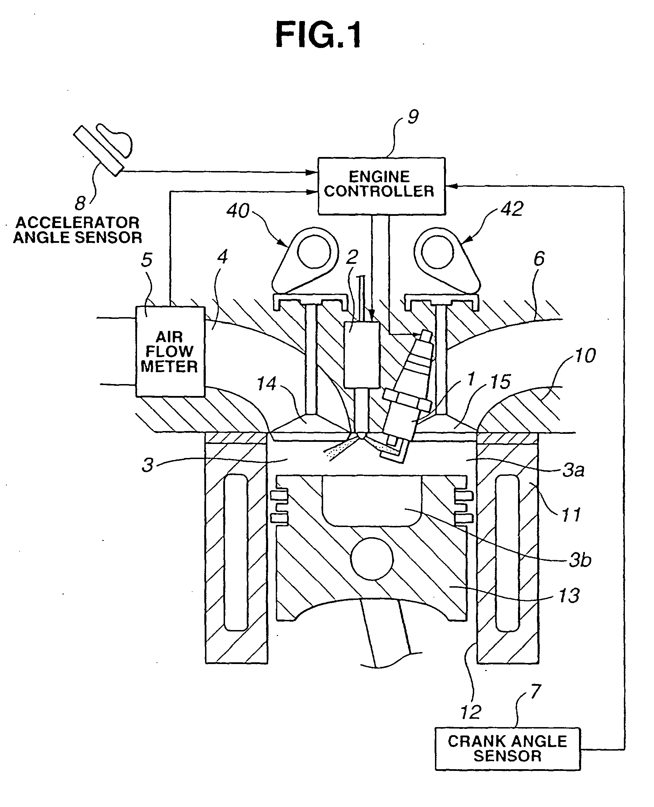

Figure 1 provides a block diagram of an internal combustion engine operated on gasoline fuel.

In Figure 1, the area of a combustion chamber of the engine is shown. The engine has a cylinder head 10 and a cylinder block 11. It has at least one cylinder 12 with a piston 13 reciprocating therein to define a combustion chamber 3. A spark plug 1 and a fuel injection valve 2 are provided for combustion chamber 3. Spark plug 1 can produce spark within combustion chamber 3, while fuel injection valve 2 can inject fuel directly into combustion chamber 3. Combustion chamber 3 is communicating with intake and exhaust ports 4 and 6 via intake and exhaust valves 14 and 15, which are actuated by variable valve controllers 40 and 42.

Various sensors are provided to assist in accomplishing auto-ignition at appropriate ignition point over wide range of engine speed and load. Various sensors may include an air flow meter 5 located upstream of intake port 4 for measuring intake air quantity, a crank angle sensor 7, and an accelerator angle sensor 8. Crank angle sensor 7 detects crank angle or crank position of the engine. Accelerator angle sensor 8 detects accelerator opening degree representing load request by an operator.

Engine controller 9 receives signals from the various sensors and determines injection time and fuel quantity for gasoline fuel injections as well as spark time.

According to the first embodiment, combustion chamber 3 is defined by a first combustion space portion 3a between cylinder head 10 and a crown surface of piston 13, and a second combustion space portion 3b recessed inwardly from the crown surface of piston 13.

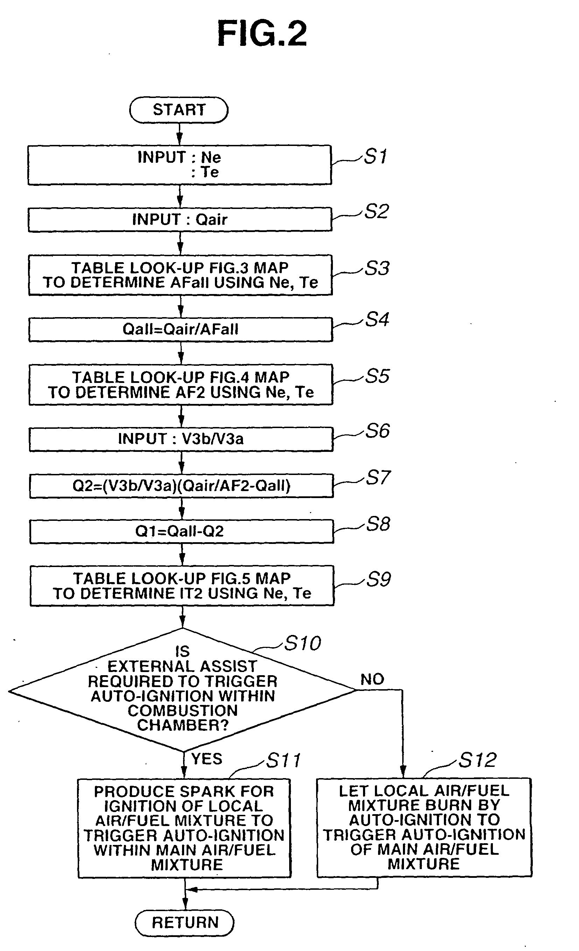

Referring to Figure 2, the flow chart illustrates a control routine of the first embodiment according to the present **teaching.** In step S1, controller 9 inputs information as to engine speed Ne and load request Te by carrying out calculation based on output signal from crank angle sensor 7 and calculation based on output signal from accelerator angle sensor 8. In step S2, controller 9 inputs information as to intake air quantity Qair by carrying out calculation based on output signal from air flow meter 5.

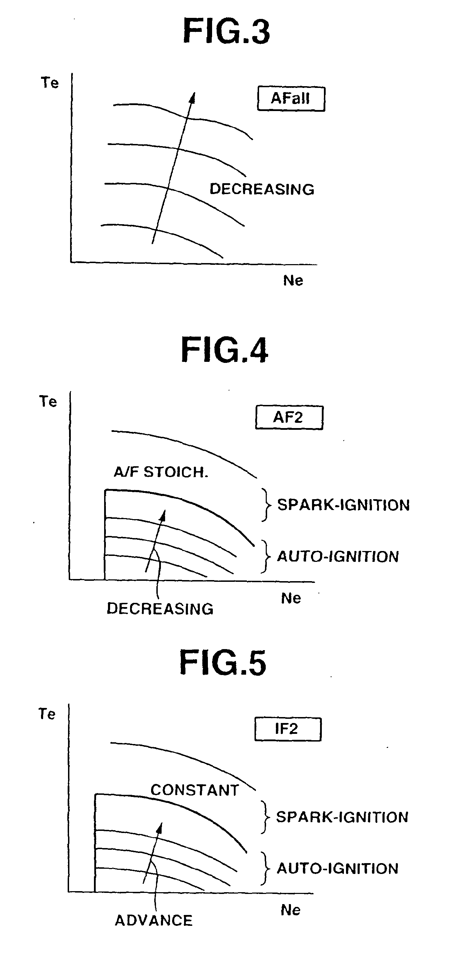

In the next step S3, controller 9 performs a table look-up operation of Figure 3 map to determine a value of overall air/fuel ratio AFall using engine speed Ne and load request Te. Appropriate values of overall air/fuel ratio AFall may be found in the map of Figure 3. The overall air/fuel ratio AFall represents an air/fuel ratio required if the cylinder is filled with homogeneous charge.

In step S4, controller 9 determines total fuel quantity Qall for injections per one cycle by calculating the following equation:

$$Qall = Qair/AFall \ldots (1).$$

In step S5, controller 9 performs a table look-up operation of Figure 4 map to determine local air/fuel ratio AF2 using engine speed Ne and load request Te. Local air/fuel ratio AF2 represents air/fuel ratio of a local mixture formed around spark plug 1. Appropriate values of local air/fuel ratio AF2 may be found in the map of Figure 4. As shown in Figure 4, during operation with high load where the local air/fuel mixture is to be ignited by external assist such as a spark in this embodiment, local air/fuel ratio AF2 is held at the stoichiometry. During operation with light or middle load where the external assist such as spark is not required and auto-ignition takes place throughout the local air/fuel mixture, local air/fuel ratio AF2 is greater than the stoichiometry to provide lean local air/fuel mixture. The lighter the load request becomes, the leaner the local air/fuel mixture becomes.

In step S6, controller 9 inputs a volume ratio (V3b/V3a) between second combustion space 3b and first combustion space 3a at top dead center of piston 13. This ratio is determined by design values of the engine and stored in a memory of controller 9.

In step S7, controller 9 determines fuel quantity Q2 for injection of fuel for ignition based on the volume ratio (V3b/V3a), intake air quantity Qair, total fuel quantity Qall, and local air/fuel ratio AF2 by calculating the following equation:

$$Q2 = (V3b/V3a) \times (Qair/AF2 - Qall) \ldots (2).$$

In step S8, controller 9 determines fuel quantity Q1 for injection to form main air/fuel mixture by calculating the following equation:

$$Q1 = Qall - Q2 \ldots (3).$$

In step 59, controller 9 performs table look-up operation of Figure 5 map using engine speed Ne and load request Te to determine injection time IT2 for injection of fuel for ignition. Appropriate values of injection time IT2 may be found in the map of Figure 5. As shown in Figure 5, during operation with high load where the local mixture is to be ignited by external assist in the form of spark, injection time IT2 is held constant. During operation with light or middle load where external assist is not required to cause auto-ignition to take place throughout the local mixture, injection time IT2 advances as load request increases. The setting is such that injection time IT2 during operation with high load is retarded than injection time IT2 during operation with light or middle load. This setting is needed to prevent auto-ignition within the local air/fuel mixture prior to spark, which is set at a crank position around top dead center.

In step S10, controller 9 determines based on engine speed Ne and load request Te whether or not external assist in the form of spark is required to produce flame to trigger auto-ignition within the main air/fuel mixture. If this is the case, control goes to step S11. In step S11, controller 9 instructs ignition system to produce spark at spark timing to ignite the local air/fuel mixture to produce flame to trigger auto-ignition within the main air/fuel mixture. If the interrogation in step S10 results in negative so that external assist in the form of spark is not required, control goes to step S12. In step S12, controller 9 will not take any action for production of spark, letting local air/fuel mixture burn by auto-ignition to trigger auto-ignition of the main air/fuel mixture.

During induction stroke of piston, fuel injection valve 2 carries out a first injection of quantity Q1 of fuel. The fuel injected mixes with intake air to form main homogeneous air/fuel mixture within cylinder 12. Air/fuel ratio of the main air/fuel mixture is set on the lean side of the stoichiometry so that auto-ignition within the main air/fuel mixture will not take place at around top dead center of compression stroke. Subsequently, during the second half of compression stroke, fuel injection valve 2 carries out a second injection of quantity Q2 of fuel for ignition at injection time IT2. If it is determined based on engine speed Ne and load request Te that external assist in the form of spark is needed, fuel quantity Q2 for second injection is set to provide local air/fuel mixture having AF2 as great as the stoichiometry. If it is determined that the external assist is not needed, fuel quantity Q2 is set to provide very lean local air/fuel mixture with AF2 almost twice as great as the stoichiometry. In this manner, during operation with light load, auto-ignition takes place throughout the local air/fuel mixture to trigger auto-ignition within the main air/fuel mixture. During operation with high load, flame propagation due to spark ignition of the local air/fuel mixture will trigger auto-ignition within the main air/fuel mixture.

As engine speed Ne increases, time, which may be used for reform of fuel toward auto-ignition, becomes short, hampering stable auto-ignition of local air/fuel mixture. Therefore, according to this embodiment, the higher the engine speed Ne becomes, the further operation points at which external assist is required extend in such a direction as to cause a reduction in load request Te, as readily seen from Figures 4 and 5.

Besides, during operation at low engine speeds, like idle operation, there is sufficient time which may be used for reform of fuel, but cooling loss is great to cause release of heat from cylinder, making it difficult to hold temperature within the cylinder high enough for auto-ignition. Therefore, according to this embodiment, external assist in the form of spark is provided to ensure ignition of the local air/fuel mixture to trigger the main air/fuel mixture during operation at engine speeds falling in a predetermined low engine speed range irrespective of magnitude of load request, as shown in Figures 4 and 5.

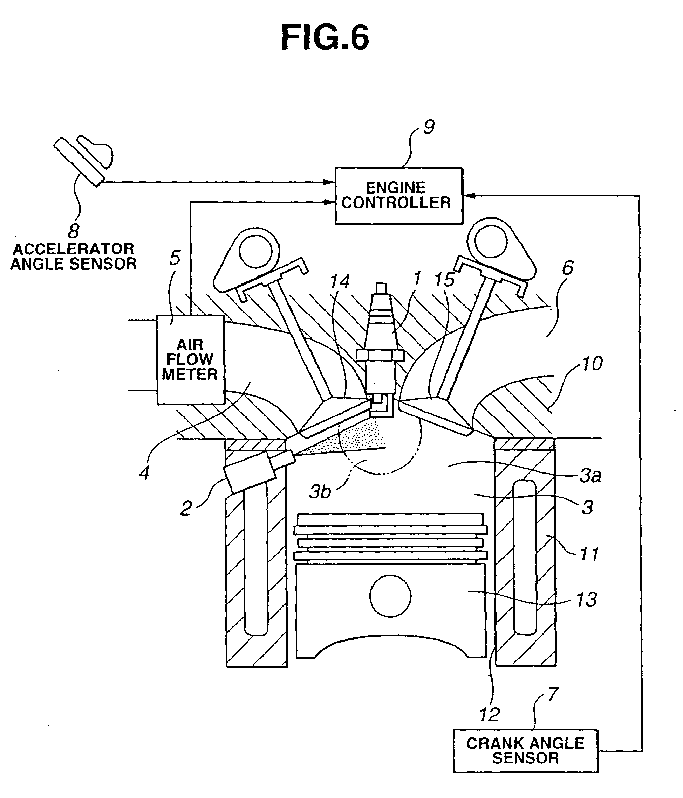

Figure 6 provides a diagram illustrating the second embodiment according to the present teaching

The second embodiment is substantially the same as the first embodiment. However, the second embodiment is different from the first embodiment in that a piston 13 is not provided with a recess within its crown, and a cylinder head 10 has a pent roof type combustion chamber. As different from the first embodiment, a fuel injection valve 2 is arranged below intake port 4 for direct injection of fuel for dispersion around spark plug 1.

In applying the control logic illustrated by the flow chart of Figure 2, a combustion chamber 3 is divided into a first combustion space 3a and a second combustion space 3b. The second combustion space 3b has a volume around spark plug 1. The second combustion space has a volume resulting from subtracting the volume of second combustion space 3b from the volume of combustion chamber 3 at top dead center. A volume ratio V3b/V3a is calculated based on the first and second combustion spaces 3a and 3b defined as above. Using the volume ratio thus determined, the same logic as explained along the flow chart of Figure 2 is equally applicable to this second embodiment.

From the preceding description it will be appreciated that the present **teaching** is applicable to various different types of conventional internal combustion engines with minor modification. The various engines include a direct cylinder injection diesel engine and a direct cylinder injection stratified gasoline engine, both of which is quipped with a piston with a crown recess as shown in Figure 1, and a popular gasoline engine as shown in Figure 6. Accordingly, no substantially modification to existing engines is required to apply the present **teaching.**

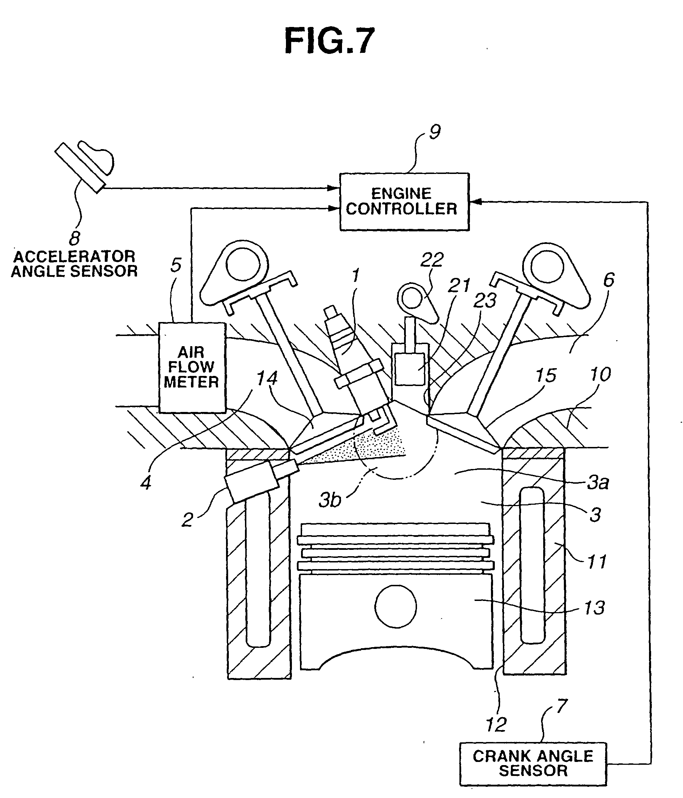

Figure 7 provides a diagram illustrating the third embodiment. In the third embodiment, external assist in the form of additional compression is used instead of spark.

The third embodiment is substantially the same as the second embodiment except the provision of a control piston 21 instead of the spark plug 1 and the use of a single injection during operation with high load.

In Figure 7, control piston 21 is reciprocally located within a cylindrical bore 23. Cylindrical bore 23 is in direct communication with a combustion chamber 3. A cam driver 22 is rendered operable to drive control piston 21. When rendered inoperable, cam driver 22 cannot drive control piston 21.

According to this embodiment, during operation with high load, cam driver 22 is rendered operable to drive control piston 21 at around top dead center of compression stroke, adding additional compression to the content of cylinder 12 to cause auto-ignition of main air/fuel mixture. During operation with light load, cam driver 22 is rendered inoperable to drive control piston 21, leaving control piston 21 at rest.

Additional power is required for activation of control piston 21. However, the control piston 21 is left at rest during operation with light load so that increase in fuel consumption due to activation of control piston 21 is suppressed.

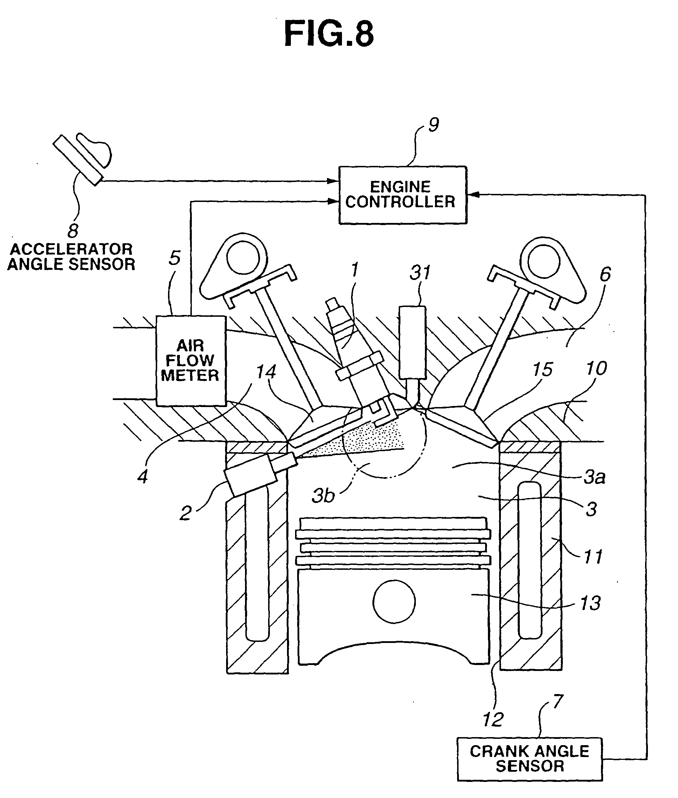

Figure 8 provides a diagram illustrating the fourth embodiment **and the combination of the features of independent claim 1**. In this embodiment, external assist in the form of injection of ignitable fuel is used instead of additional compression or spark.

This embodiment is substantially the same as the third embodiment except the provision of a fuel injection valve 31 instead of the control piston 21.

In the fourth embodiment, fuel injection valve 31 is provided in addition to a fuel injection valve 2. Fuel injection valve 2 carries out injection of fuel with low cetane number during induction stroke, thereby to form lean air/fuel mixture within a combustion chamber 3 around top dead center of compression stroke. Fuel injection valve 31 is provided for carrying out injection of ignitable fuel with high cetane number at injection time around top dead center. The ignitable fuel, such as, gas oil, is delivered to fuel injection valve 31 from a separate tank.

During operation with high load, the fuel injection through fuel injection valve 2 causes creation of lean main air/fuel mixture within cylinder 12. Subsequently, at injection time during compression stroke, the ignitable fuel is injected through fuel injection valve 31. Auto-ignition takes place within the ignitable fuel immediately after its injection, causing auto-ignition within the main air/fuel mixture. During operation with light load, injection of the ignitable fuel will not be carried out. Under this operating conditions, similarly to the other embodiments, fuel injection valve 2 carries out first injection of fuel during induction stroke to form lean main air/fuel mixture, and second injection of fuel for ignition at injection time during the subsequent compression stroke.

According to the fourth embodiment, the use of ignitable fuel is limited to operation with light load so that volume of the tank for the ignitable fuel may be reduced to the required minimum level.

## Claims

1.   An internal combustion engine having at least one cylinder (12), a reciprocating piston (13) within the cylinder (12) to define a combustion chamber (3) therein, wherein
     auto-ignition within main air/fuel mixture is triggered by auto-ignition of local air/fuel mixture under first predetermined operating conditions, and auto-ignition within the main air/fuel mixture is triggered by external assist under second predetermined operating conditions
     a fuel injection valve (2) carries out injection of fuel for auto-ignition under the first predetermined operating conditions and
     fuel injection valve (2) carries out injection of fuel for ignition by the external assist under the second predetermined operating conditions.

2.   An internal combustion engine according to claim 1, wherein the local air/fuel mixture occupies a combustion space (3a) of the combustion chamber (3) and starts to burn by auto-ignition under conditions created within the cylinder (12) under the first predetermined operating conditions.

3.   An internal combustion engine according to claim 1 or 2, wherein the operating conditions are represented by engine speed (Ne) and load request (Te), and the higher engine speed (Ne) becomes, the further operation points at which the external assist is required extend in such a direction as to cause a reduction in load request (Te).

4.   An internal combustion engine according to at least one of the preceding claims 1 to 3, wherein the second predetermined operating conditions include engine operation with high load, engine operation at idling or low engine speeds.

5.   An internal combustion engine according to at least one of the preceding claims 1 to 4, wherein the injection of fuel for ignition takes place at an injection time during compression stroke of the piston (13).

6.   An internal combustion engine according to any one of the preceding claims 1 to 5, wherein the fuel injected for ignition begins to burn at around top dead center of compression stroke of the piston (13).

7.   An internal combustion engine according to any one of claims 1 to 6, wherein fuel quantity for injection of fuel for ignition is greater under the second predetermined operating conditions than the fuel quantity under the first predetermined operating conditions.

## Patentansprüche

1.   Brennkraftmaschine mit zumindest einem Zylinder (12), einem hin- und hergehenden Kolben (13) innerhalb des Zylinders (12), um darin eine Brennkammer (3) zu bilden, wobei
     eine Selbstzündung innerhalb des Luft- / Kraftstoff- Gemisches durch die Selbstzündung von einem lokalen Luft- / Kraftstoff- Gemisch unter ersten vorbestimmten Betriebsbedingungen ausgelöst wird und eine Selbstzündung innerhalb des Luft-/ Kraftstoff- Gemisches durch externe Unterstützung unter zweiten vorbestimmten Betriebsbedingungen ausgelöst wird,
     ein Kraftstoffeinspritzventil (2) eine Kraftstoffeinspritzung für die Selbstzündung unter den ersten vorbestimmten Betriebsbedingungen ausführt und
     ein Kraftstoffeinspritzventil (2) eine Kraftstoffeinspritzung für die Zündung durch die externe Unterstützung unter zweiten vorbestimmten Betriebsbedingungen ausführt.

2.   Brennkraftmaschine nach Anspruch 1, wobei das örtliche Luft- / Kraftstoff- Gemisch einen Verbrennungsraum (3a) der Brennkammer (3) einnimmt und durch Selbstzündung unter Bedingungen, die innerhalb des Zylinders (12) unter den ersten vorbestimmten Betriebsbedingungen erzeugt werden, beginnt, zu verbrennen.

3. Brennkraftmaschine nach Anspruch 1 oder 2, wobei die Betriebsbedingungen durch Motordrehzahl (Ne) und Lastanforderung (Te) repräsentiert werden, und je höher die Motordrehzahl (Ne) wird, desto weiter sich die Arbeitspunkte, bei denen die externe Unterstützung erforderlich ist, in solch eine Richtung erstrecken, um eine Reduzierung in der Lastanforderung (Te) zu verursachen.

4. Brennkraftmaschine nach zumindest einem der vorhergehenden Ansprüche 1 bis 3, wobei die zweiten vorbestimmten Betriebsbedingungen den Motorbetrieb mit hoher Last, Motorbetrieb bei Leerlauf oder niedrigen Motordrehzahlen enthalten.

5. Brennkraftmaschine nach zumindest einem der vorhergehenden Ansprüche 1 bis 4, wobei die Einspritzung von Kraftstoff zur Zündung zu einer Einspritzzeit während des Verdichtungshubs des Kolbens (13) stattfindet.

6. Brennkraftmaschine nach einem der vorhergehenden Ansprüche 1 bis 5, wobei der Kraftstoff, eingespritzt zur Zündung, bei annähernd dem oberen Totpunkt des Verdichtungshubs des Kolbens (13) beginnt zu verbrennen.

7. Brennkraftmaschine nach einem der vorhergehenden Ansprüche 1 bis 6, wobei die Kraftstoffmenge für die Kraftstoffeinspritzung zur Zündung unter den zweiten vorbestimmten Betriebsbedingungen größer als die Kraftstoffmenge unter den ersten vorbestimmten Betriebsbedingungen ist.

**Revendications**

1. Moteur à combustion interne ayant au moins un cylindre (12), un piston en va-et-vient (13) dans le cylindre (12) pour définir une chambre de combustion (3) à l'intérieur, dans lequel
un autoallumage dans un mélange air/carburant principal est déclenché par autoallumage du mélange air/carburant local dans des premières conditions de fonctionnement prédéterminées et un autoallumage dans le mélange air/carburant principal est déclenché par une assistance externe dans des secondes conditions de fonctionnement prédéterminées,
une soupape d'injection de carburant (2) effectue l'injection de carburant pour un autoallumage dans les premières conditions de fonctionnement prédéterminées et
la soupape d'injection de carburant (2) effectue l'injection de carburant pour allumage par l'assistance externe dans les secondes conditions de fonctionnement prédéterminées.

2. Moteur à combustion interne selon la revendication 1, dans lequel le mélange air/carburant local occupe un espace de combustion (3a) de la chambre de combustion (3) et commence à brûler par autoallumage dans des conditions créées dans le cylindre (12) dans les premières conditions de fonctionnement prédéterminées.

3. Moteur à combustion interne selon la revendication 1 ou 2, dans lequel les conditions de fonctionnement sont représentées par la vitesse de moteur (Ne) et la requête de charge (Te), et plus la vitesse de moteur (Ne) s'élève, plus les points de fonctionnement auxquels l'assistance externe est requise s'étendent dans une direction telle à entraîner une réduction de la requête de charge (Te).

4. Moteur à combustion interne selon au moins l'une des revendications 1 à 3 précédentes, dans lequel les secondes conditions de fonctionnement prédéterminées comprennent le fonctionnement de moteur avec une charge élevée, le fonctionnement de moteur au ralenti ou des vitesses de moteur basses.

5. Moteur à combustion interne selon au moins l'une des revendications 1 à 4 précédentes, dans lequel l'injection de carburant pour allumage a lieu à un moment d'injection pendant la course de compression du piston (13).

6. Moteur à combustion interne selon l'une quelconque des revendications 1 à 5 précédentes, dans lequel le carburant injecté pour allumage commence à brûler à peu près au niveau du point mort supérieur de course de compression du piston (13).

7. Moteur à combustion interne selon l'une quelconque des revendications 1 à 6, dans lequel la quantité de carburant pour injection de carburant pour allumage est plus importante dans les secondes conditions de fonctionnement prédéterminées que la quantité de carburant dans les premières conditions de fonctionnement prédéterminées.

# FIG.1

# FIG.2

START

INPUT : Ne
: Te — S1

INPUT : Qair — S2

TABLE LOOK-UP FIG.3 MAP
TO DETERMINE AFall USING Ne, Te — S3

Qall=Qair/AFall — S4

TABLE LOOK-UP FIG.4 MAP
TO DETERMINE AF2 USING Ne, Te — S5

INPUT : V3b/V3a — S6

Q2=(V3b/V3a)(Qair/AF2-Qall) — S7

Q1=Qall-Q2 — S8

TABLE LOOK-UP FIG.5 MAP
TO DETERMINE IT2 USING Ne, Te — S9

IS
EXTERNAL ASSIST
REQUIRED TO TRIGGER
AUTO-IGNITION WITHIN
COMBUSTION
CHAMBER? — S10

NO

YES — S11

PRODUCE SPARK FOR
IGNITION OF LOCAL
AIR/FUEL MIXTURE TO
TRIGGER AUTO-IGNITION
WITHIN MAIN AIR/FUEL
MIXTURE

S12

LET LOCAL AIR/FUEL
MIXTURE BURN BY
AUTO-IGNITION TO
TRIGGER AUTO-IGNITION
OF MAIN AIR/FUEL
MIXTURE

RETURN

# FIG.3

Te

AFall

DECREASING

Ne

# FIG.4

Te

AF2

A/F STOICH.

} SPARK-IGNITION

} AUTO-IGNITION

DECREASING

Ne

# FIG.5

Te

IF2

CONSTANT

} SPARK-IGNITION

} AUTO-IGNITION

ADVANCE

Ne

# FIG.6

# FIG.7

ACCELERATOR
ANGLE SENSOR

ENGINE
CONTROLLER

AIR
FLOW
METER

CRANK ANGLE
SENSOR

# FIG.8

ENGINE
CONTROLLER

*9*

*8*
ACCELERATOR
ANGLE SENSOR

*5*

AIR
FLOW
METER

*1*

*31*

*6*

*14*

*15*

*10*

*4*

*2*

*3b*

*3a*

*3*

*11*

*13*

*12*

*7*

CRANK ANGLE
SENSOR

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10196424 A
- JP 11210539 A
- WO 9942718 A